# EUROPEAN PATENT APPLICATION

(11) **EP 3 737 044 A1**
(43) Date of publication of application: **11.11.2020**
(21) Application number: 19173045.6
(22) Date of filing: 07.05.2019
(51) Int. Cl.: H04L 12/46, H04L 12/24

(54) **A METHOD FOR PROVIDING AN END-TO-END CONNECTIVITY BETWEEN NETWORK DEVICES OF AN AUTOMATION NETWORK**

(71) Applicant: Siemens Aktiengesellschaft, 80333 München (DE)
(72) Inventor: Frank, Reinhard, 81369 München (DE); Zeiger, Florian, 85635 Höhenkirchen-Siegertsbrunn (DE); Gawron-Deutsch, Tobias, 1040 Wien (AT)

(57) **Abstract**

A method for providing an end-to-end connectivity between network devices of different network segments of an automation network, wherein virtual network functions, VNF, retrieved from a VNF repository are composed to provide at least one VNF service chain deployed on a programmable forwarding plane of at least one network device.

## Description

The invention relates to a method for providing an end-to-end connectivity between network devices of different network segments of an automation network, and in particular relates to provide a flow-based tunnel with virtual network function chaining on at least one programmable forwarding plane.

Automation networks can comprise one or more automation network segments. An extension of an automation network and/or the interconnection of different automation network segments has to be planned in order not to increase a collision domain with negative effects on the network performance of the automation network. The requirement for connectivity between network devices in automation network segments is constantly increasing. With increasing size of the automation network, the likelihood of data packet collisions increases, in particular the possibility that different automation network segments do flood each other with messages, in particular layer 2 messages .

Accordingly, it is an object of the present invention to provide a method and apparatus for providing an end-to-end connectivity between network devices of different network segments of an automation network without reducing the performance of the automation network.

This object is achieved according to a first aspect of the present invention by a method providing an end-to-end connectivity between network devices of different network segments of an automation network comprising the features of claim 1.

The invention provides according to the first aspect a method for providing an end-to-end connectivity between network devices of different network segments of an automation network, wherein virtual network functions retrieved from a virtual network function repository are composed to provide at least one virtual network function service chain deployed on a programmable forwarding plane of at least one network device.

An advantage of the method according to the first aspect of the present invention is that the method has not to run on an application level in user space but can be implemented to network interface cards with programmable forwarding planes.

A further advantage of the method according to the first aspect of the present invention resides in the fact that extensions of the automation network are also possible during runtime of the automation network.

A further advantage of the method according to the first aspect is that it can establish an end-to-end connectivity between network devices of different networks of the automation network on a per-flow basis.

In a possible embodiment of the method according to the first aspect of the present invention, a virtual network function deployment module of said automation network retrieves required virtual network functions from said virtual network function repository in response to a received connectivity configuration to provide associated network device specific artefacts composed and deployed on the programmable forwarding plane of the at least one network device.

In a further possible embodiment of the method according to the first aspect of the present invention, the virtual network function deployment module of said automation network retrieves required virtual network functions from the virtual network function repository in response to a trigger event to provide associated network device specific artefacts composed and deployed on the programmable forwarding plane of the at least one network device.

The provision of an event triggered composition of virtual network function chains allows to manage the complexity of an automation network and to empower service and/or applications to set up end-to-end connectivity according to predefined rules and definitions.

In a further possible embodiment of the method according to the first aspect of the present invention, the end-to-end connectivity comprises a tunnel between the network devices of different network segments.

In a possible embodiment of the method according to the first aspect of the present invention, the end-to-end connectivity comprises a layer 2 tunnel (layer 2 of OSI/ISO model).

In a further possible embodiment of the method according to the first aspect of the present invention, the end-to-end connectivity comprises a layer 3 tunnel (layer 3 of OSI/ISO model).

In a further possible embodiment of the method according to the first aspect of the present invention, the composed network device specific deployment artefacts of the virtual network function service chain deployed on the programmable forwarding plane are instantiated on a network device where the virtual network function service chain is enabled.

In a further possible embodiment of the method according to the first aspect of the present invention, a trigger function provided at the programmable forwarding plane generates a trigger signal in response to an observed registered trigger event and forwards the generated trigger signal to the virtual network function deployment module of said automation network.

In a further possible embodiment of the method according to the first aspect of the present invention, the virtual network functions stored in the virtual network function repository are configured to run in the programmable forwarding plane of a network device.

In a still further possible embodiment of the method according to the first aspect of the present invention, the virtual network functions stored in the virtual network function repository comprise
capturing packets of a flow,
forwarding packets of a flow,
modifying packets of a flow,
filtering packets of a flow,
deleting packets of a flow,
duplicating packets of a flow,
tagging packets of a flow,
signing packets of a flow,
encapsulating packets of a flow,
decapsulating packets of a flow,
fragmentizing packets of a flow and/or
defragmentizing packets of a flow.

Accordingly, the method of the present invention allows for a wide range of different virtual network functions which can be adapted flexibly to any kind of use case.

In a further possible embodiment of the method according to the first aspect of the present invention, the composition of the retrieved virtual network functions is performed according to a connectivity pattern defined by the connectivity configuration or associated with a trigger event.

In a further possible embodiment of the method according to the first aspect of the present invention, a flow from a source network device of a first network segment to a destination network device of a second network segment comprises a sequence of packets each having a flow signature representing the respective flow.

The provision of a flow signature provides besides identification of the respective flow additional security against unwanted attacks corrupting the automation network.

In a further possible embodiment of the method according to the first aspect of the present invention, the flow signature comprises at least one attached label or a hash value calculated on at least a predetermined portion of the packets of the flow.

In a still further possible embodiment of the method according to the first aspect of the present invention, the flow signature of the flow is calculated by a processor of the programmable forwarding plane of a network device.

In a still further possible embodiment of the method according to the first aspect of the present invention, the packets of a flow comprise data packets, in particular control data packets.

In a further possible embodiment of the method according to the first aspect of the present invention, the virtual network function repository is provided by a cloud application.

The invention further provides according to a further aspect an automation network comprising the features of claim 14.

The invention provides according to the second aspect an automation network with at least one network segment including network devices each comprising at least one network interface having a programmable forwarding plane,
wherein virtual network functions retrieved from a virtual network function repository are composed to provide at least one virtual network function service chain deployed on one or more programmable forwarding planes to provide an end-to-end connectivity between a network device of said network segment and another network device of a different network segment forming part of said automation network or of an external network.

In a possible embodiment of the automation network according to the second aspect of the present invention, the automation network further comprises a virtual network function deployment module which is adapted to retrieve required virtual network functions from the virtual network function repository in response to a received connectivity configuration and/or in response to a trigger event to provide associated network device specific deployment artefacts composed and deployed on the programmable forwarding plane of at least one network device.

In the following, possible embodiments of the different aspects of the present invention are described in more detail with reference to the enclosed figures.
- Fig. 1: shows a schematic diagram for illustrating a provision of an end-to-end connectivity between network devices of different network segments of an automation network by the method according to the first aspect of the present invention;
- Fig. 2: shows a further schematic diagram for illustrating the provision of an end-to-end connectivity between network devices of different network segments of an automation network by a method according to the first aspect of the present invention;
- Fig. 3: shows a signal diagram for illustrating the operation of a method according to the present invention;
- Fig. 4: illustrates a mechanism to extend an automation network employing the method according to the present invention;
- Fig. 5: shows a further schematic diagram for illustrating a possible exemplary embodiment of a method according to the present invention;
- Fig. 6: shows a signal diagram for illustrating the operation of an embodiment of an automation network according to the present invention;
- Fig. 7: shows a further schematic diagram for illustrating a possible exemplary embodiment of an automation network according to the present invention.

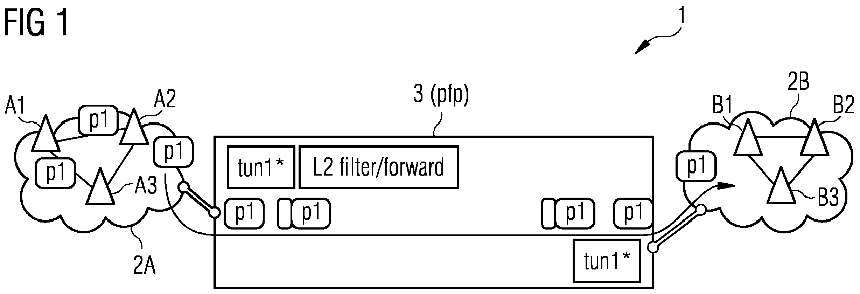

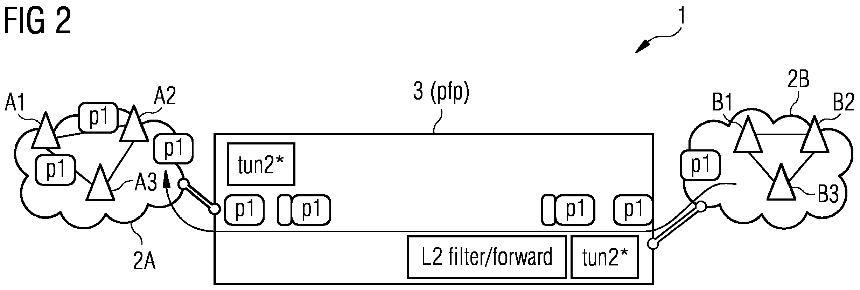

Figs. 1, 2 illustrate examples for providing an end-to-end connectivity between network devices of different network segments of an automation network 1 using the method according to the present invention. With the method according to the present invention, virtual network functions VNFs are retrieved from a virtual network function repository and then composed to provide at least one virtual network function, VNF, service chain VNF-SC deployed on a programmable forwarding plane of at least one network device.

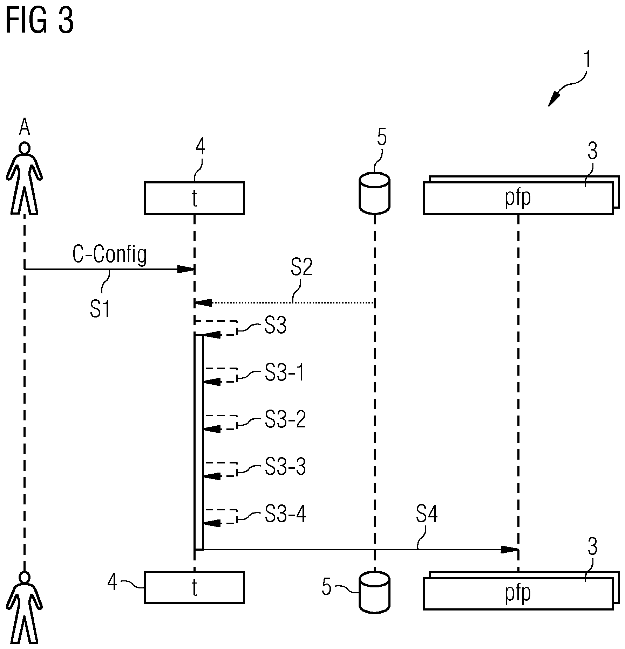

Fig. 1 illustrates an exemplary automation network 1. The automation network 1 comprises at least one network segment including network devices. In the illustrated example of Fig. 1, the automation network 1 comprises two network segments 2A, 2B each having several network devices ND. Each network device ND of an automation network segment does comprise at least one network device interface having a programmable forwarding plane 3. Virtual network functions VNFs retrieved from a virtual network function repository 5 which can also form part of the automation network 1 are composed to provide at least one virtual network function service chain VNF-SC. The virtual network function service chain VNF-SC is deployed on one or more programmable forwarding planes 3 to provide an end-to-end connectivity between a network device ND of a first network segment and another network device ND of another network segment. In a possible embodiment, a virtual network function, VNF, deployment module 4 of the automation network 1 can retrieve required virtual network functions VNFs from the virtual network function repository 5 in response to a received connectivity and/or in response to a trigger event to provide associated network device specific artefacts which are composed and deployed on the programmable forwarding plane of at least one network device ND. In the illustrated example of Fig. 1, the automation network 1 can comprise for instance a production cell as a first automation network segment 2A and another production cell as a second automation network segment 2B. For example, a network device ND in the automation network segment 2A (production cell A) may require to send a packet P to a network device ND in the other automation network segment 2B. In this use case, the end-to-end connectivity provided by the method according to the present invention comprises a tunnel provided between the network devices ND of the different network segments. With the method according to the present invention, an end-to-end connectivity between the two network devices ND can be established. The established tunnel may comprise a layer 2 or a layer 3 tunnel. The tunnel for the flow between the two network devices is generated through a programmable forwarding plane (pfp) 3. Further, an end-to-end connectivity between the two network devices ND can also be established in the other direction as illustrated in Fig. 2. As shown schematically in Fig. 1, a packet P1 is transported in a flow from a network device A1 of the first automation network segment 2A to one or more or even all network devices of the other second automation network segment 2B in a layer 2 tunnel. In the illustrated embodiment, the programmable forwarding plane 3 can implement a virtual network function service chain VNF-SC comprising establishing of a tunnel end point at the first automation network segment 2A, a filtering function to filter packets P and the establishment of a tunnel connectivity at the other automation segment 2B. In the illustrated example, the programmable forwarding plane 3 is configured to set up tunnel end points in the two target network segments 2A, 2B and provides for a layer 2 packet filter and forwarding function. Fig. 1 shows the required virtual network functions VNFs and the appropriate chaining for capturing packets of a flow from the network device ND at network segment A to a network device ND in network segment B. Fig. 2 shows the required virtual network functions VNFs and an appropriate chaining for capturing packets of a flow from a network device in network segment B to a network device in network segment A. The programmable forwarding plane 3 can interact in a possible embodiment with an administrator A, a virtual network function VNF deployment module 4 and/or with a virtual network function VNF repository 5 as also illustrated in the signal diagram of Fig. 3.

As can be seen in the signal diagram of Fig. 3, an administrator A can interact with a virtual network function VNF deployment module 4 of the automation network 1. The automation network 1 further comprises in the illustrated embodiment a virtual network function, VNF, repository 5 which is adapted to store virtual network function VNFs. In a possible embodiment, the virtual network function repository 5 further comprises for each virtual network function VNF additional information such as context data and/or metadata. In a possible embodiment, the virtual network function VNF deployment module 4 retrieves required virtual network function VNFs from the virtual network function repository 5 in response to a received connectivity configuration C-CONFIG received from an administrator A, for instance the administrator A of the first automation network segment 2A. In a possible embodiment, the administrator A may send defined connectivity patterns, configurations and/or references to the required virtual network functions VNFs to the VNF deployment module 4 as illustrated in step S1 in Fig. 3. In response to the received connectivity configuration C-CONFIG, the virtual network function deployment module 4 retrieves required virtual network functions VNFs from the VNF repository 5 in step S2. The VNF deployment module 4 then creates device specific deployment artefacts in step S3. For the exemplary embodiment illustrated in Figs. 1, 2, the virtual network function deployment module 4 creates a VNF for a tunnel end point A in step S3-1, a VNF for a tunnel end point B in step S3-2 and then creates a VNF layer 2 packet capture and forwarding in step S3-3. Finally, the VNF deployment module 4 creates a VNF for a layer 2 packet capture and forwarding in the other direction. In a further step S4, the VNF deployment module 4 can compose a VNF service chain in each direction that comprise associated network device specific artifacts composed and deployed on the programmable forwarding plane 3 of at least one network device as illustrated in Fig. 3. The VNF service chain can be deployed on a programmable forwarding plane 3 of a single network device or distributed over different programmable forwarding planes 3 of different network devices. The programmable forwarding plane 3 can perform a packetwise processing of packets of a flow. Each flow can comprise a sequence of packets transmitted by a source network device to a destination network device. The flow can have different purposes. The flow can for instance comprise a monitoring flow or a control flow.

The virtual network function repository such as the virtual network function repository 5 illustrated in the signalling diagram of Fig. 3 can comprise available virtual network functions VNFs such as providing tunnel end points, layer 2 adapters and/or packet filters. All available virtual network functions VNFs are provided for the involved target platforms and are designed to run in programmable forwarding planes 3. The administrator such as the administrator A illustrated in the signalling diagram of Fig. 3 can design connectivity patterns (function chains) and can select appropriate virtual network functions VNFs composed to generate a VNF service chain.

The virtual network function deployment module 4 can provide an interface to the programmable forwarding plane 3. In the illustrated embodiment of Fig. 3, the virtual network function deployment module 4 can receive configurations from administrator A and can retrieve corresponding virtual network functions VNFs from the virtual network function repository 5 in step S2. The virtual network function deployment module 4 also creates the deployment artifacts of configured VNFs for the VNF service chain (prepared for target devices) and deploys them in step S4 on the target network devices.

Fig. 1 shows, for example, as a result of a programmable forwarding plane 3 configured for setting up tunnel end points in the target network segments 2A, 2B as well as for a layer 2 packet filter and a forwarding function. Administrator A defines in the given example a layer 2 connectivity for a specific data flow between network devices of network segments 2A, 2B and can send in step S1 the configurations Config to the virtual network function deployment module 4. The virtual network function deployment module 4 retrieves in step S2 all required virtual network functions VNFs from the virtual network function repository 5 and creates in step S3 all associated deployment artifacts. A VNF is configured in step S3-1 to act as a tunnel end point on the network device for network segment 2A. A further VNF is configured to act as a tunnel end point in step S3-2 on the network device for network segment 2B. A further VNF deployment artefact is created in step S3-3 to filter and forward layer 2 packets of the defined flow from a source to a destination at the network device of a network segment 2A. A further VNF artefact is created to filter and forward layer 2 packets of the defined flow (source to destination) at the network device for network segment 2B. All virtual network functions VNFs are deployed in step S4 to the target devices and can be composed according to the connectivity patterns defined by an administrator such as administrator A.

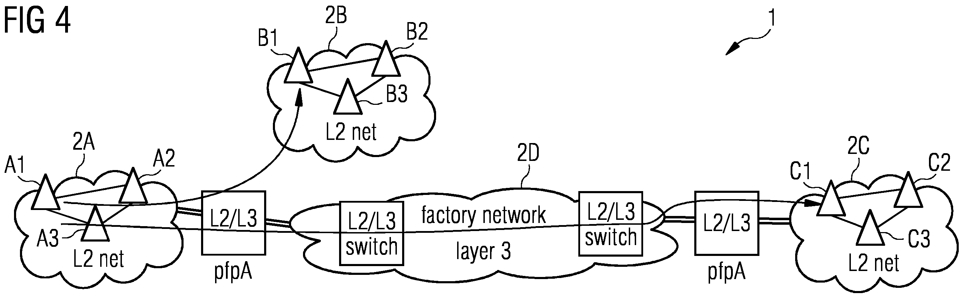

The mechanism illustrated in Fig. 3 can also be used to provide end-to-end connectivity through other layer 3 networks as illustrated in Fig. 4. In the example of Fig. 4, an automation network 1 comprises automation network segments 2A, 2B, 2C such as production cells, coupled, for example, by another external layer 3 network segment 2D. Accordingly, a network segment can comprise a layer 2 network segment or a layer 3 network segment.

In a possible embodiment, an end-to-end connectivity can be established on a per flow basis. The method according to the present invention prevents different network segments of the automation network 1 from flooding each other with messages, in particular with layer 2 messages. The method according to the present invention does not have to run on an application level in a user space but can also be implemented in network interface cards NICs with programmable forwarding planes 3. As also illustrated in Fig. 4, an extension of the automation network 1 is possible during runtime, for example to provide a setup layer 3 connectivity or to provide different virtual network function service chains VNF-SC per flow instance. The automation network 1 according to the present invention can comprise at least two automation network segments each having several interconnected network devices. Each network device of the automation network segment can have one or more network device interfaces which may be implemented as network interface cards NICs. The network interface cards NICs can comprise at least one programmable forwarding plane (PFA) 3. The programmable forwarding plane (PFA) 3 can be implemented as a hardware component such as an FPGA but also as a software component of the operation system of the network device.

The virtual network functions VNFs stored in the VNF repository 5 of the automation network 1 can comprise different types of virtual network functions VNFs adapted to process packets P of a flow, in particular a data and/or control packet flow. The virtual network functions VNFs can for instance comprise a function including capturing packets of a flow, forwarding packets of a flow, modifying packets of a flow, filtering packets of a flow, deleting packets of a flow, duplicating packets of a flow, tagging packets of a flow, signing packets of a flow, encapsulating packets of a flow, decapsulating packets of a flow, fragmentizing packets of a flow and/or defragmentizing packets of a flow.

The virtual network functions VNFs can be combined, in particular chained, according to the requirements of the use case. The necessary deployment artefacts can be generated for distribution.

The virtual network functions VNFs stored in the VNF repository 5 are configured to run in the programmable forwarding plane 3 of a network device. The flow from a source network device of a first network segment such as network segment 2A to a destination network device of a second network segment such as network segment 2B comprises a sequence of packets P which can be processed according to the network device specific artefacts implementing the VNF functions of the VNF service chain deployed on the at least one programmable forwarding plane 3. The flow comprising a sequence of packets can comprise in a possible embodiment a flow signature representing and identifying the respective flow. This flow signature can comprise at least one attached label L or a hash value H which can be calculated on at least a predetermined portion of the packets P of the respective flow. In a possible implementation, the flow signature of the flow can be calculated by a processor of the programmable forwarding plane 3 of the respective network device. In a possible embodiment, the VNF repository 5 of the automation network 1 can be provided by a cloud application. In a possible embodiment, each packet P of the flow can comprise a header section and a payload section to carry data. The virtual network function VNF can process in a possible embodiment a packet of the flow by processing either a portion of the header and/or a portion of the payload section of the respective packet. In a possible embodiment, the automation network 1 can comprise as an automation network segment a SCADA network segment.

In a further possible embodiment of the method according to the present invention, the VNF deployment module 4 of the automation network 1 retrieves required virtual network functions VNFs from the VNF repository 5 in response to a trigger event to provide associated network device specific artefacts composed and deployed on the programmable forwarding plane 3 of the at least one network device.

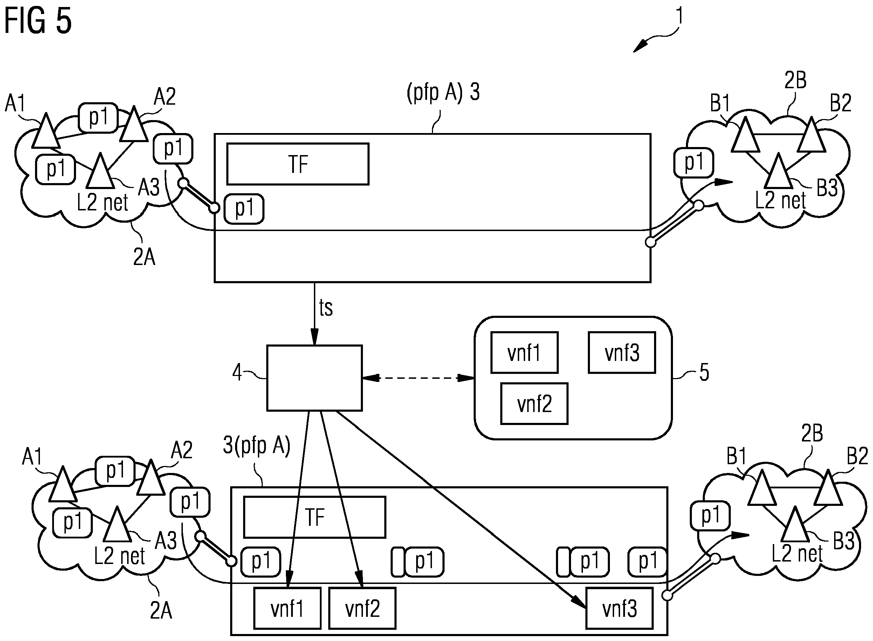

Fig. 5 illustrates an example for illustrating such an embodiment. A network device ND such as a forklift in an industrial network segment 2A delivers in the illustrated example data to a maintenance and management network device ND which is connected to a network segment 2B of the automation network 1. Continuously keeping up this connection after a one-time configuration and deployment is not desired because there is a paradigm of minimizing external connections, unattended keep-alive messages of unused connections. Further continuously keeping up a connection cannot work in case of mobile handheld maintenance network devices with changing access networks.

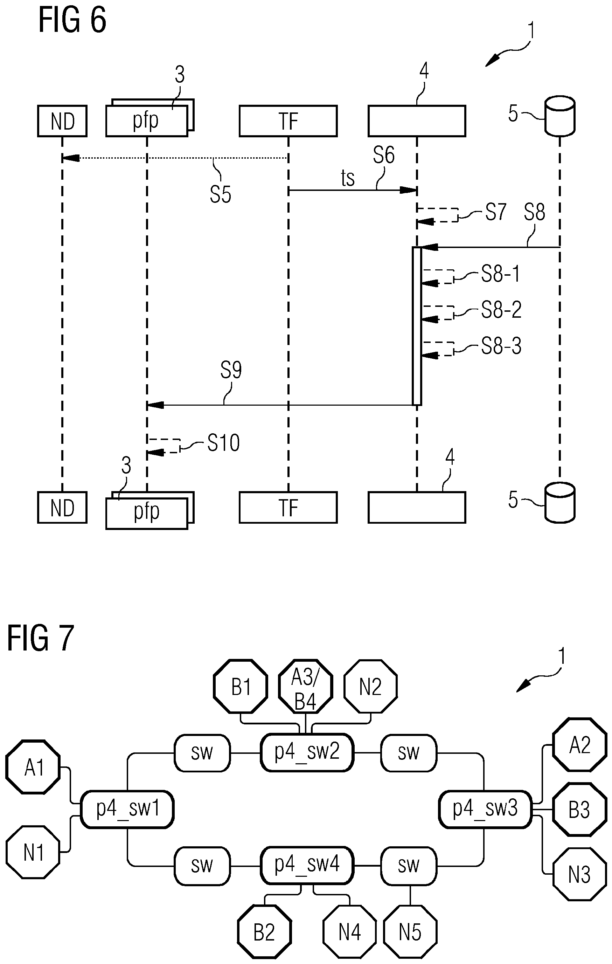

Accordingly, in the embodiment illustrated in Fig. 5, a mechanism is provided that can trigger an end-to-end connectivity on demand in order to deploy required virtual network functions VNFs based on a created trigger signal ts. In a possible embodiment, a trigger function TF provided at a programmable forwarding plane (pfp) 3 does generate a trigger signal ts in response to an observed registered trigger event and forwards the generated trigger signal ts to a VNF deployment module 4 of the automation network 1 as also illustrated in the signalling diagram of Fig. 6. The trigger function TF can listen for a trigger event in step S5 at a network device ND. The trigger function TF which can be provided at the programmable forwarding plane 3 can observe triggering events which can occur in a network segment 2 of the automation network 1. In response to an observed registered trigger event, the trigger function TF can generate a trigger signal ts which is supplied in step S6 to the virtual network function deployment module 4 of the automation network 1. The virtual network function deployment module 4 can hold a set of allowed configurations for VNF service chains. It can also hold a set of action presettings related to registered trigger events indicated by the received trigger signal ts. As soon as the trigger signal ts is received by the VNF deployment module 4, a corresponding action set can be executed and required virtual network functions VNFs can be automatically retrieved. In the illustrated embodiment, the VNF deployment module 4 creates a deployment schedule in step S7 and retrieves deployment artefacts from the VNF repository 5 in step S8 and creating a VNF1 for network device A in step S8-1, creating a VNF2 for network device A in step S8-2 and creating a VNF3 for network device B in step S8-3. The retrieved virtual network functions VNFs are configured and deployed in step S9 on the programmable forwarding planes 3 of the involved network devices and/or network device interfaces as shown in Fig. 6. In the illustrated example of the use case shown in Fig. 5, the trigger function TF generates a trigger signal ts in response to an observed registered trigger event to the VNF deployment module 4 which places the associated required virtual network function VNF to the programmable forwarding planes 3 as illustrated in the lower part of Fig. 5. The sequence diagram of Fig. 6 shows how the trigger function TF generates the trigger signal ts based on the observed trigger event ts. The VNF deployment module 4 retrieves all required VNF functions from the VNF repository 5 depending on the received trigger signal ts and creates corresponding deployable components or artefacts for the target environments. For example, the VNF deployment module 4 creates in step S8-2 a VNF1 for network device A and a further VNF2 for the same network device A in step S8-2 as also illustrated in Fig. 5. Finally, the VNF deployment module 4 creates a VNF3 for a network device B as also schematically illustrated in Fig. 5. Then, the required VNFs are deployed by the VNF deployment module 4 in step S9 to the involved forwarding planes 3 according to the configured VNF service chain. Finally, in step S10, the VNFs can be initialized and the VNF service chain including the composed virtual network functions VNFs such as VNF1, VNF2, VNF3 is implemented on the forwarding planes 3. In a possible embodiment, the composed network device specific deployment artefacts of the VNF service chain deployed on the at least one programmable forwarding plane 3 are instantiated on the respective network device and the VNF service chain is enabled, for example by an administrator A in response to a trigger event.

In a further embodiment, a trigger signal triggers the generation of the deployment artefacts required for the requested VNF combination which are then distributed and deployed.

The method according to the present invention allows for an on-demand setup of links between network devices. The method provides for a dynamic deployment and chaining of virtual network functions VNFs which can be triggered by defined trigger events. The method has a minimal footprint by running functionalities in programmable forwarding planes 3 of network device interfaces. The method can provide for a defined end-to-end connectivity on different levels, in particular level 2 and/or level 3. The end-to-end connectivity provided by the method according to the present invention can be implemented per each network device, per each packet flow and/or per each packet of a packet flow. In a possible embodiment, each flow of packets can comprise an associated flow signature representing the respective flow. In a possible embodiment, flows or data streams between end points or network devices can be signed at network level. This is also illustrated in the example shown in Fig. 7. In the illustrated example, applications and/or application groups are connected via switches of an automation network 1. The switches form network nodes, i.e. network devices of the automation network 1. Some of the network nodes or switches can comprise a programmable forwarding plane 3 having a programmable protocol-independent packet processor. Some applications may not require any signing of a flow whereas more security-sensitive applications require signing of these flows to provide protection against attacks such as denial of service attacks or man-in-the-middle attacks. In the illustrated example of Fig. 7, there is a first group of applications A including applications A1, A2, A3, where flows between these nodes or applications have to be signed. In the illustrated example, there is another group of applications B, i.e. applications B1, B2, B3, where flows between these nodes also have to be signed. A third group of applications comprise normal nodes where the data streams or flows between these nodes cannot be influenced. In the illustrated example, flows between members of the first group A are signed automatically in the forwarding plane 3 of the switch being closest to the respective application using a group-specific flow signature. The flow signature of a flow is generated by a processor of the programmable forwarding plane 3 of the respective network device, i.e. switch. A flow signal can comprise in a possible embodiment at least one attached label L. In a further possible embodiment, the flow signature can comprise a hash value H calculated on at least a predetermined portion of packets of the respective flow.

In the illustrated embodiment of Fig. 7, a first switch comprising a processor in a programmable forwarding plane 3 provides all packets with a label L before the application layer. For example, for group A, the switches SW with the signing processor P4 being closest to the respective applications are aware to which labels L they have been subscribed and forward only those packets P which comprise an attached label L with corresponding values. This provides an advantage, in particular for broadcasts in Ethernet networks. Two different groups A and B can transmit and receive their respective broadcast undisturbed from other groups. The advantage with respect to conventional WLANs is that without changing a setup, for each switch a label filter can be instantiated. This does facilitate the handling of different application groups A, B, N.

The flow signature can comprise a static signature, in particular an attached label L. In an alternative embodiment, the flow signature can comprise a dynamic signature, in particular a hash value H calculated on at least a predetermined portion of the packets P of the respective flow. Static flow signatures such as labels L might be observed or read by third parties so that a man-in-the-middle may provision his packets with identical labels L. Accordingly, in public networks, the attachment of static labels L are not sufficient to guarantee that only the correct packets have passed for instance a filter. Accordingly, in a possible embodiment, the flow signature of the flow provided by a processor of the programmable forwarding plane 3 comprises a calculated hash value H. The salt of the algorithm can comprise a shared secret known to each participant of a group. Accordingly, a group salt can be used by the processor on the switch being closest to the application node. A first signing processor provides a packet P received from a specific application (identified for instance by means of source port/source address and/or switch port) with the calculated hash value H. The hash value H can be calculated based on the content of the packet and can be attached as a label. Each switch SW which acts as a filter can generate also a hash value H using the same group salt value and can compare the hash values H. In case that both hash values H are identical, the data packet is forwarded to the respective application. In a possible implementation, a new second label L can be used to increase performance. In this case, there is a shared secret label and a public visible label. Other possible embodiments can use different algorithms, for instance use asymmetric keys. The computation capabilities and the required data rate of the switches can be taken into account when selecting a fitting signature technology. The provision of a flow signature increases the security of the automation network 1 against network attacks.

### List of Reference Signs

- 1: automation network
- 2: network segment
- 3: programmable forwarding plane
- 4: VNF deployment modul
- 5: VNF repository

## Claims

1. A method for providing an end-to-end connectivity between network devices of different network segments (2) of an automation network (1),
wherein virtual network functions, VNF, retrieved from a VNF repository (5) are composed to provide at least one VNF service chain deployed on a programmable forwarding plane (3) of at least one network device.

2. The method according to claim 1, wherein a VNF deployment module (4) of said automation network (1) retrieves required virtual network functions, VNFs, from said VNF repository (5) in response to a received connectivity configuration and/or in response to a trigger event to provide associated network device specific artefacts composed and deployed on the programmable forwarding plane (3) of the at least one network device.

3. The method according to claim 1 or 2, wherein the end-to-end connectivity comprises a tunnel, in particular a layer 2 or layer 3 tunnel, between the network devices of the different network segments (2).

4. The method according to claim 2 or 3, wherein the composed network device specific deployment artefacts of a VNF service chain deployed on the programmable forwarding plane (3) are instantiated on a network device where the VNF service chain is enabled.

5. The method according to any of the preceding claims 2 to 4, wherein a trigger function provided at the programmable forwarding plane (3) generates a trigger signal in response to an observed registered trigger event and forwards the generated trigger signal to the VNF deployment module (4) of said automation network (1).

6. The method according to any of the preceding claims 1 to 5, wherein the virtual network functions, VNFs, stored in the VNF repository (5) are configured to run in the programmable forwarding plane (3) of a network device.

7. The method according to any of the preceding claims 1 to 6, wherein the virtual network functions, VNFs, stored in the VNF repository (5) comprise
- capturing packets of a flow,
- forwarding packets of a flow,
- modifying packets of a flow,
- filtering packets of a flow,
- deleting packets of a flow,
- duplicating packets of a flow,
- tagging packets of a flow,
- signing packets of a flow,
- encapsulating packets of a flow,
- decapsulating packets of a flow,
- fragmentizing packets of a flow and/or
- defragmentizing packets of a flow.

8. The method according to any of the preceding claims 1 to 7, wherein the composition of the retrieved virtual network functions, VNFs, is performed according to a connectivity pattern defined by the connectivity configuration or associated with a trigger event.

9. The method according to any of the preceding claims 1 to 8, wherein the flow from a source network device of a first network segment to a destination network device of a second network segment comprises a sequence of packets each having a flow signature representing the respective flow.

10. The method according to claim 9, wherein the flow signature comprises at least one attached label, L, or a hash value, H, calculated on at least a predetermined portion of the packets of the flow.

11. The method according to claim 9 or 10, wherein the flow signature of the flow is provided by a processor of the programmable forwarding plane (3) of a network device.

12. The method according to any of the preceding claims 9 to 11, wherein the packets of a flow comprise data packets, in particular control data packets.

13. The method according to any of the preceding claims 1 to 12, wherein the VNF repository (5) is provided by a cloud application.

14. An automation network (1) with at least one network segment (2) including network devices each comprising at least one network interface having a programmable forwarding plane (3),
wherein virtual network functions, VNFs, retrieved from a VNF repository (5) are composed to provide at least one VNF service chain deployed on one or more programmable forwarding planes (3) to provide an end-to-end connectivity between a network device of said network segment (2) and another network device of a different network segment (2') forming part of said automation network (1) or of an external network.

15. The automation network according to claim 14, further comprising a VNF deployment module (4) which is adapted to retrieve required VNFs from the VNF repository (5) in response to a received connectivity configuration and/or in response to a trigger event to provide associated network device specific deployment artefacts composed and deployed on the programmable forwarding plane (3) of at least one network device.
